# EUROPEAN PATENT SPECIFICATION

(11) **EP 1 386 685 B1**
(45) Date of publication and mention of the grant of the patent: **26.04.2006**
(21) Application number: 03016489.1
(22) Date of filing: 22.07.2003
(51) Int. Cl.: B23D 45/04

(54) **Fence protection arrangement for a slide miter saw**
Anordnung zum Schützen eines Anschlags für eine Gehrungssäge
Système de protection d'une butée pour une scie à onglet coulissante

(30) Priority: 02.08.2002 US 211735
(43) Date of publication of application: 04.02.2004
(73) Proprietor: Black & Decker Inc., Newark, DE 19711 (US)
(72) Inventor: Wattenbach, Brian P., Columbia, Maryland 21044 (US)
(74) Representative: Bell, Ian Stephen

(56) References cited:
- US-A- 5 943 931

## Description

This invention relates generally to slide miter saws and specifically to fence protection arrangements for slide miter saws.

Slide miter saws are well known in the art as they provide extended cutting range over non-sliding miter saws. Like non-sliding miter saws, the slide miter saws have a base, a rotatable table attached to the base, a saw assembly including a motor and a blade driven by the motor, where the saw assembly is pivoted downwardly for cutting a workpiece disposed on the base and table, and a sliding fence assembly connected to the base for supporting a workpiece. However, slide miter saws enable the user to move the saw assembly horizontally along the table.

Most slide miter saws accomplish this by connecting the saw assembly to at least one rail, which is slidably attached to a support housing connected to the table (see, e.g., US Patent No. 6,067,885). With such arrangement, the user would pull the saw assembly forwardly, move the saw assembly downwardly, then push the saw assembly rearwardly for cutting the workpiece.

In typical slide miter saws, the user would pull the saw assembly forwardly, bevel the saw assembly, move the saw assembly downwardly, then push the saw assembly rearwardly for cutting the workpiece. However, if the user has not adjusted the sliding fence assembly, the saw assembly may cut through the fence. Thus, it is desirable to provide a fence protection arrangement.

US5943931 describes an adjustable fence for a sliding compound miter saw. The sliding compound miter saw comprises a base assembly having a rotatable table assembly. The saw includes a saw blade, a blade guard and a motor for driving the saw blade. The fence assembly is interconnected with the base and extends laterally across the table assembly against which a workpiece is positioned and supported for performing a cutting operation. The fence assembly includes first and second movable fences. A gap between the two movable fences provides clearance for the saw blade to perform a cutting operation completely through the workpiece. The movable fences are each movable toward and away from saw blade in order to allow the operator to selectively adjust the clearance gap for bevel cutting operations.

According to an aspect of the present invention, there is provided a miter saw according to claim 1 comprising:
a base;
a fence assembly comprising a fixed fence attached to the base and a movable fence movably connected to the fixed fence;
a table rotatably attached to the base;
a support housing pivotally connected to the table;
at least one rail slidably connected to the support housing; and
a saw assembly pivotally attached to the at least one rail and movable between a front position and a rear position, the saw assembly comprising a trunnion disposed on the at least one rail, a pivot arm pivotally attached to the trunnion, an upper blade guard connected to the pivot arm, a motor attached to the upper blade guard, and a blade driven by the motor;
characterised in that at least one of the trunnion, pivot arm, upper blade guard, and motor is disposed between the blade and the fence assembly and contacts the fence assembly when the saw assembly is bevelled and moved towards the rear position. Dependent claims 2-5 disclose preferred embodiments of the miter saw according to claim 1.

According to another aspect of the present invention, there is provided a method of using a miter saw according to claim 6, comprising the steps of:
providing a miter saw with a base, a fence assembly comprising a fixed fence attached to the base and a movable fence movably connected to the fixed fence, a table rotatably attached to the base, a support housing pivotally connected to the table, at least one rail slidably connected to the support housing, and a saw assembly pivotally attached to the at least one rail and movable between a front position and a rear position, the saw assembly comprising a trunnion disposed on the at least one rail, a pivot arm pivotally attached to the trunnion, an upper blade guard connected to the pivot arm, a motor attached to the upper blade guard, and a blade driven by the motor,
beveling the saw assembly;
pivoting the saw assembly downwardly;
moving the saw assembly towards the rear position in order to cut a workpiece;
and characterised by:
   contacting the fence assembly with the at least one of the trunnion, pivot arm, upper blade guard, and motor whereby at least one of the trunnion, pivot arm, upper blade guard, and motor is disposed between the blade and the fence assembly.

Dependent claims 7 and 8 disclose further details of the method according to claim 6.

Additional features and benefits of the present invention are described, and will be apparent from, the accompanying drawings and the detailed description below.

The accompanying drawings illustrate preferred embodiments of the invention according to the practical application of the principles thereof, and in which:
FIG. 1 is a side view of a slide miter saw according to the invention; and
FIG. 2 is a partial front view of the embodiment of FIG. 1.

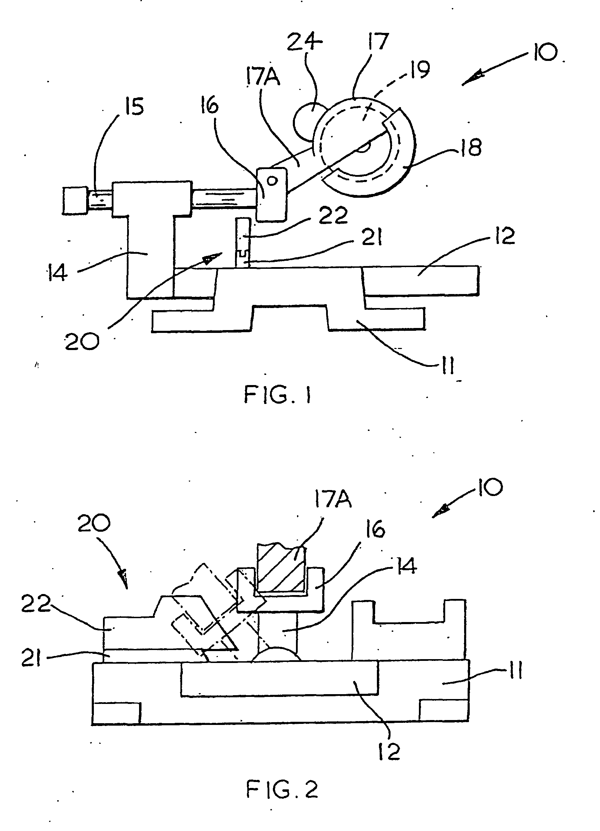

The invention is now described with reference to the accompanying figures, wherein like numerals designate like parts. Referring to FIGS. 1-2, a slide miter saw 10 preferably has a base 11, a table 12 rotatably connected to the base 11, a support housing 14 pivotally connected to table 12, at least one (and preferably two) rail(s) 15 slidably connected to the support housing 14, and a saw assembly which comprises a trunnion 16 attached to one end of the rail(s) 15, a pivot arm 17A pivotably attached to trunnion 16, a motor 24, a blade 19 driven by the motor, an upper blade guard 17 for covering an upper part of blade 19, and a lower blade 18 pivotally attached to the upper blade guard 17 for covering a lower part of blade 19. Preferably the motor 24 is attached to the upper blade guard 17. These elements are well known in the art. Persons skilled in the art are referred to US Patent No. 6,067,885, which is wholly incorporated by reference herein.

The slide miter saw 10 may also have a movable fence assembly 20 attached to the base 11. Movable fence assembly 20 preferably extends laterally across table 12, against which a workpiece can be positioned and supported for performing a cutting operation thereon. Movable fence assembly 20 may include a fixed fence 21 attached to base 11, and a movable fence 22 connected to the fixed fence 21. Preferably, movable fence 22 is slidably attached to fixed fence 21. Persons skilled in the art are referred to US Patent Nos. 5,297,463 and 5,943,931, which are wholly incorporated by reference herein.

At least one component of the saw assembly is located between blade 19 and the fence assembly 20, so that, when the saw assembly is bevelled and moved towards the rearward position such component contacts the movable fence 22 before blade 19, preventing blade 19 from cutting movable fence 22.

Preferably, such component will be trunnion 16. As shown in FIG. 2, when the saw assembly is bevelled, trunnion 16 would contact movable fence 22 as the saw assembly is moved rearwardly, preventing contact between blade 19 and movable fence 22. To complete the cut, the user would need to move movable fence 22 outwardly.

Persons skilled in the art will recognize that trunnion 16 is preferably disposed at a position lower than the highest point of movable fence 22, when the saw assembly is not bevelled. In addition, a plane containing blade 19 preferably contacts or intersects trunnion 16 (or any other saw assembly component used to contact movable fence 22).

While the miter saw of FIGS. 1-2 shows a miter saw 10 with one movable fence assembly 20, persons skilled in the art should recognize that the miter saw 10 can be provided with two movable fence assemblies 20 disposed on both sides of base 11. Persons skilled in the art will also recognize that it is preferable to design the above-described arrangement so that blade 19 cannot cut either movable fence assembly 20.

## Claims

1. A miter saw (10) comprising:
a base (11);
a fence assembly (20) comprising a fixed fence (21) attached to the base and a movable fence (22) movably connected to the fixed fence;
a table (12) rotatably attached to the base;
a support housing (14) pivotally connected to the table;
at least one rail (15) slidably connected to the support housing; and
a saw assembly pivotally attached to the at least one rail and movable between a front position and a rear position, the saw assembly comprising a trunnion (16) disposed on the at least one rail, a pivot arm (17a) pivotally attached to the trunnion, an upper blade guard (17) connected to the pivot arm, a motor (24) attached to the upper blade guard, and a blade (19) driven by the motor;
**characterised in that** at least one of the trunnion, pivot arm, upper blade guard, and motor is disposed between the blade and the fence assembly and contacts the fence assembly when the saw assembly is bevelled and moved towards the rear position.

2. The miter saw according to Claim 1, wherein the blade is disposed in a plane which intersects the at least one of the trunnion, pivot arm, upper blade guard, and motor.

3. The miter saw according to Claim 1 or 2, wherein the trunnion is below a highest point of the fence assembly.

4. The miter saw according to any one of the preceding claims, wherein the movable fence is slidably connected to the fixed fence.

5. The miter saw according to any one of the preceding claims, wherein the trunnion is below a highest point of the movable fence.

6. A method of using a miter saw, comprising the steps of:
providing a miter saw with a base, a fence assembly comprising a fixed fence attached to the base and a movable fence movably connected to the fixed fence, a table rotatably attached to the base, a support housing pivotally connected to the table, at least one rail slidably connected to the support housing, and a saw assembly pivotally attached to the at least one rail and movable between a front position and a rear position, the saw assembly comprising a trunnion disposed on the at least one rail, a pivot arm pivotally attached to the trunnion, an upper blade guard connected to the pivot arm, a motor attached to the upper blade guard, and a blade driven by the motor
beveling the saw assembly;
pivoting the saw assembly downwardly;
moving the saw assembly towards the rear position in order to cut a workpiece;
and **characterised by**:
contacting the fence assembly with the at least one of the trunnion, pivot arm, upper blade guard, and motor whereby at least one of the trunnion, pivot arm, upper blade guard, and motor is disposed between the blade and the fence assembly.

7. The method of Claim 6, wherein the fence assembly has a movable portion, and said movable portion is contacted by the at least one of the trunnion, pivot arm, upper blade guard, and motor in the contacting step.

8. The method of Claim 7, further comprising the step of moving the movable portion.

## Patentansprüche

1. Gehrungssäge (10) mit
einer Basis (11),
einer Anschlaganordnung (20), die einen an der Basis angebrachten festen Anschlag (21) und einen bewegbar mit dem festen Anschlag verbundenen bewegbaren Anschlag (22) aufweist,
einem drehbar an der Basis angebrachten Tisch (12),
einem schwenkbar mit dem Tisch verbundenen Stützgehäuse (14),
mindestens einer verschiebbar mit dem Stützgehäuse verbundenen Schiene (15) und
einer schwenkbar an der mindestens einen Schiene angebrachten und zwischen einer vorderen Stellung und einer hinteren Stellung bewegbaren Sägeanordnung, die einen an der mindestens einen Schiene vorgesehenen Lagerblock (16), einen schwenkbar am Lagerblock angebrachten Schwenkarm (17a), eine mit dem Schwenkarm verbundene obere Schutzhaube (17), einen an der oberen Schutzhaube angebrachten Motor (24) und ein vom Motor angetriebenes Blatt (19) aufweist,
**dadurch gekennzeichnet, dass** zumindestens einer von Lagerblock, Schwenkarm, oberer Schutzhaube und Motor zwischen dem Blatt und der Anschlaganordnung vorgesehen ist und die Anschlaganordnung berührt, wenn die Sägeanordnung geneigt ist und in Richtung auf die hintere Stellung bewegt wird.

2. Gehrungssäge nach Anspruch 1, bei der das Blatt in einer Ebene angeordnet ist, die zumindest einen von Lagerblock, Schwenkarm, oberer Schutzhaube und Motor schneidet.

3. Gehrungssäge nach Anspruch 1 oder 2, bei der sich der Lagerblock unterhalb eines höchsten Punkts der Anschlaganordnung befindet.

4. Gehrungssäge nach einem der vorhergehenden Ansprüche, bei der der bewegbare Anschlag verschiebbar mit dem festen Anschlag verbunden ist.

5. Gehrungssäge nach einem der vorhergehenden Ansprüche, bei der sich der Lagerblock unterhalb eines höchsten Punkts des bewegbaren Anschlags befindet.

6. Verfahren der Verwendung einer Gehrungssäge mit den Schritten:
Zurverfügungstellen einer Gehrungssäge mit einer Basis, einer Anschlaganordnung, die einen an der Basis angebrachten festen Anschlag und einen bewegbar mit dem festen Anschlag verbundenen bewegbaren Anschlag aufweist, einem drehbar an der Basis angebrachten Tisch, einem schwenkbar mit dem Tisch verbundenen Stützgehäuse, mindestens einer verschiebbar mit dem Stützgehäuse verbundenen Schiene und einer Sägeanordnung, die schwenkbar an der mindestens einen Schiene angebracht und zwischen einer vorderen und einer hinteren Stellung bewegbar ist, wobei die Sägeanordnung einen an der mindestens einen Schiene vorgesehenen Lagerblock, einen schwenkbar am Lagerblock angebrachten Schwenkarm, eine mit dem Schwenkarm verbundene obere Schutzhaube, einen an der oberen Schutzhaube angebrachten Motor und ein vom Motor angetriebenes Blatt aufweist,
Neigen der Sägeanordnung,
Abwärtsschwenken der Sägeanordnung,
Bewegen der Sägeanordnung in Richtung auf die hintere Stellung, um ein Werkstück zu schneiden,
und **gekennzeichnet durch**
Berühren der Anschlaganordnung mit mindestens einem von Lagerblock, Schwenkarm, oberer Schutzhaube und Motor, wodurch sich mindestens einer von Lagerblock, Schwenkarm, oberer Schutzhaube und Motor zwischen Blatt und Anschlaganordnung befindet.

7. Verfahren nach Anspruch 6, bei dem die Anschlaganordnung einen bewegbaren Bereich hat und dieser bewegbare Bereich beim Berührungsschritt durch mindestens einen von Lagerblock, Schwenkarm, oberer Schutzhaube und Motor berührt wird.

8. Verfahren nach Anspruch 7, ferner mit dem Schritt des Bewegens des bewegbaren Bereichs.

## Revendications

1. Une scie à onglet (10) comprenant :
une base (11) ;
un ensemble de butée (20), comprenant une butée fixe (21), fixée sur la base, et une butée mobile (22) mobile, reliée à la butée fixe ;
une table (12), attachée à rotation à la base;
un boîtier support (14), relié à pivotement à la table ;
au moins un rail (15), relié à coulissement au boîtier de support ; et
un ensemble de scie, attaché à pivotement au au moins un rail et déplaçable entre une position avant et une position arrière, l'ensemble de scie comprenant un tronçon (16) disposé sur le au moins un rail, un bras de pivot (17a) fixé à pivotement sur le tronçon, une garde de lame supérieure (17) reliée au bras de pivot, un moteur (24) fixé à la garde de lame supérieure, et une lame (19) entraînée par le moteur ;
**caractérisée en ce qu'**au moins l'un du tronçon, du bras de pivot, de la garde de lame supérieure et du moteur est disposé entre la lame et l'ensemble de butée et est en contact avec l'ensemble de butée lorsque l'ensemble de scie est placé en position de chanfrein et déplacé vers la position arrière.

2. La scie à onglet selon la revendication 1, dans laquelle la lame est disposée dans un plan coupant au moins l'un, du tronçon, du bras de pivot, de la garde de lame supérieure et du moteur.

3. La scie à onglet selon la revendication 1 ou 2, dans laquelle le tronçon est situé en dessous d'un point de hauteur maximale de l'ensemble de butée.

4. La scie à onglet selon l'une quelconque des revendications précédentes, dans laquelle la butée mobile est reliée à coulissement sur la butée fixe.

5. La scie à onglet selon l'une quelconque des revendications précédentes, dans laquelle le tronçon est placé au-dessous d'un point de hauteur maximale de la butée mobile.

6. Un procédé d'utilisation d'une scie à onglet, comprenant les étapes consistant à :
fournir une scie à onglet ayant une base, un ensemble de butée, comprenant une butée fixe, fixée à la base, et une butée mobile, reliée de façon déplaçable à la butée fixe, une table attachée à rotation sur la base, un boîtier support relié à pivotement à la table, au moins un rail, relié à coulissement sur le boîtier support, et un ensemble de scie, relié à pivotement au au moins un rail et déplaçable entre une position avant et une position arrière, l'ensemble de scie comprenant un tronçon disposé sur le au moins un rail, un bras pivot fixé à pivotement sur le tronçon, une garde de lame supérieure reliée au bras pivot, un moteur fixé à ladite garde de lame supérieure, et une lame entraînée par le moteur,
le placement de l'ensemble de scie en position de chanfrein,
le pivotement vers le bas de l'ensemble de scie,
le déplacement de l'ensemble de scie en direction de la position arrière pour couper une pièce d'oeuvre ; et **caractérisé par** :
la mise en contact de l'ensemble de butée avec au moins un élément; parmi le tronçon, le bras de pivot, la garde de lame supérieure et le moteur, de manière qu'au moins l'un, du tronçon, du bras de pivot, de la garde de lame supérieure et du moteur, soit disposé entre la lame et l'ensemble de butée.

7. Le procédé selon la revendication 6, dans lequel l'ensemble de butée a une partie mobile, et ladite partie mobile est mise en contact par le au moins un, du tronçon, du bras de pivot, de la garde de lame supérieure et du moteur, à l'étape de mise en contact.

8. Le procédé selon la revendication 7, comprenant en outre l'étape de déplacement de la partie mobile.
